# EUROPÄISCHE PATENTSCHRIFT

(11) **EP 3 502 500 B1**
(45) Veröffentlichungstag und Bekanntmachung des Hinweises auf die Patenterteilung: **24.02.2021**
(21) Anmeldenummer: 18000948.2
(22) Anmeldetag: 07.12.2018
(51) Int. Cl.: F16C 33/72, F16C 33/76, F16C 13/00, F16C 33/58, F16C 19/38, F16C 19/48

(54) **STÜTZLAGER**
SUPPORT BEARING
PALIER D'APPUI

(30) Priorität: 21.12.2017 DE 102017011933; 29.01.2018 DE 102018101870
(43) Veröffentlichungstag der Anmeldung: 26.06.2019
(73) Patentinhaber: Schaeffler Technologies AG & Co. KG, 91074 Herzogenaurach (DE)
(72) Erfinder: Escher, Maximilian, 97424 Schweinfurt (DE); Stützlein, Markus, 97209 Veitshöchheim (DE)

(56) Entgegenhaltungen:
- CN-A- 103 133 517
- DE-A1- 10 061 786
- DE-U- 1 859 511

## Beschreibung

Die Erfindung betrifft eine Stützrolle, insbesondere eine Laufrolle oder Kurvenrolle, mit einem Außenring, einem Innenring und zwischen dem Außenring und dem Innenring auf Laufbahnen abrollbaren ersten Wälzkörpern, die in mindestens zwei Reihen nebeneinander angeordnet sind.

Eine derartige Stützrolle ist aus der DE 10201321332 A1 bekannt. Die Stützrolle ist als Radiallager ausgeführt.

Die bekannte Stützrolle ist bei hohen radialen und gleichzeitig axialen Belastungen stark beansprucht. Solche Axialkräfte erzeugen ein Kippmoment, welches durch das Radiallager aufgenommen werden muss. Die Tragfähigkeit der Stützrolle ist in solchen Belastungsfällen daher eingeschränkt. Weiterhin gelangen je nach Anwendungsort der Stützrolle Verunreinigungen in das Lager, die zu weiteren Belastungen und in Folge Verschleiß führen.

Die DE 18 59 511 U beschreibt eine gattungsgemäße Lagerung einer Laufrolle eines Kettenfahrzeugs, wobei Radial- als auch Axiallager Verwendung finden.

Es ist Aufgabe der Erfindung, die Belastbarkeit und Einsatzdauer einer Stützrolle zu erhöhen.

Die Aufgabe wird gelöst durch eine Stützrolle gemäß Patentanspruch 1. Demnach ist die Stützrolle mit einem Außenring, einem Innenring und zwischen dem Außenring und dem Innenring auf Laufbahnen abrollbaren ersten Wälzkörpern gekennzeichnet, die in mindestens zwei Reihen nebeneinander angeordnet sind, wobei weiterhin zwei Deckel vorhanden sind, wobei jeweils einer der Deckel an einer Stirnseite des Außenrings angeordnet ist, wobei weiterhin zwischen dem Außenring und jedem der Deckel abrollbare zweite Wälzkörper vorhanden sind. Die zweiten Wälzkörper sind in zwei oder mehr Reihen angeordnet. Die Deckel sind weiterhin klemmend am Außenring oder Innenring befestigt. Dabei sind die Deckel zum Innenring zentriert, sodass alle Komponenten des Lagers korrekt zueinander positioniert sind. Dabei kann definiert die Lagerluft des Stützlagers in der jeweiligen Einbausituation eingestellt werden. Dadurch, dass die Deckel nicht verschraubt sind, ist die Tragfähigkeit des Stützlagers verbessert.

Dabei ist ein Deckel so klemmend entweder am Außenring oder Innenring befestigt, dass keine Kraftübertragung vom Innenring zum Außenring über den Deckel erfolgt. Um eine solche Klemmung eines Deckels nur am Innenring oder Außenring zu realisieren, überdeckt insbesondere ein Deckel die Stirnseiten des Innenrings oder des Außenrings und erstreckt sich zudem bevorzugt in einen Raum zur Aufnahme der ersten Wälzkörper und zweiten Wälzkörper zwischen Innenring und Außenring hinein.

Die erfindungsgemäße Stützrolle umfasst demnach ein Radiallager und ein Axiallager und kann Kippmomente optimal aufnehmen. Somit sind eine höhere Belastbarkeit und eine Verlängerung der Einsatzdauer der Stützrolle gegeben.
Vorteilhafte Ausgestaltungen der erfindungsgemäßen Stützrolle sind nachfolgend angegeben.

So ist es besonders bevorzugt, wenn die Deckel eine Seitenführung für die ersten Wälzkörper ausbilden. Dabei kann definiert die Lagerluft des Stützlagers in der jeweiligen Einbausituation eingestellt werden.

Die Deckel sind insbesondere einen Raum zwischen dem Außenring und dem Innenring begrenzend ausgebildet. Dadurch lässt sich der Eintritt von Wasser und Verunreinigungen in das Stützlager verringern und ein Verschleiß des Lagers minimieren.

Bevorzugt ist an jedem der Deckel mindestens eine erste Dichtungsanordnung vorhanden, die zum Außenring hin abdichtend ausgebildet ist. Die mindestens eine erste Dichtungsanordnung ist dabei vorzugsweise radial an jedem der Deckel vorhanden. Durch die mindestens eine erste Dichtungsanordnung lässt sich ein Eintritt von Wasser und Verunreinigungen in das Lager und damit der Verschleiß weiter vermindern und die Betriebsdauer steigern.

Die mindestens eine der Reihen an zweiten Wälzkörpern ist vorzugsweise durch mindestens einen Käfig geführt angeordnet. Dadurch wird die Positionierung der zweiten Wälzkörper insbesondere beim Zusammenbau des Lagers vereinfacht. Insbesondere ist dieser mindestens eine Käfig aus Messing ausgebildet.

Die zweiten Wälzkörper sind erfindungsgemäß in zwei Reihen oder mehr angeordnet. Dadurch lässt sich die Tragfähigkeit des Gesamtsystems, insbesondere der ersten Wälzkörper, verbessern.

Vorzugsweise sind die zweiten Wälzkörper über einen Absatz an jedem Deckel radial geführt.

An jedem der Deckel ist bevorzugt eine zweite Dichtungsanordnung vorhanden, die zum Innenring hin abdichtend ausgebildet ist. Dadurch lässt sich ein Eintritt von Wasser und Verunreinigungen in das Lager und damit der Verschleiß nochmals vermindern und die Betriebsdauer steigern.

Die Deckel sind erfindungsgemäß nicht fest mit anderen Bauteilen der Stützrolle verbunden. So sind die Deckel weder verschraubt noch vernietet oder dergleichen. Die Stützrolle wird nach dem Einbau in eine Umgebungskonstruktion über die Deckel vorgespannt. Dazu sind die Deckel zur Einstellung einer definierten Lagerluft abgepasst.

Zum leichteren Einbau der Stützrolle in eine Umgebungskonstruktion können die Deckel über eine Fixierung in Form von beispielsweise Haltebändern oder Klebestreifen mit den anderen Bauteilen der Stützrolle verbunden sein. Diese hilfsweise Fixierung wird am Einbauort aber entfernt.

Die Deckel sind vorzugsweise lediglich klemmend am Innenring befestigt und bedecken eine Stirnseite des Innenrings. Alternativ ist eine klemmende Anordnung der Deckel am Außenring möglich.
In der späteren Einbausituation ist vorgesehen, dass die zweiten Wälzkörper unter leichter Vorspannung zwischen dem jeweiligen Deckel und dem Außenring bei definierter Lagerluft eingesetzt sind. Demgegenüber ist vorgesehen, dass die ersten Wälzkörper mit einer größeren Lagerluft betrieben werden als die zweiten Wälzkörper.

Die ersten Wälzkörper sind vorzugsweise in vier Reihen nebeneinander angeordnet sind. Dadurch lässt sich die Belastbarkeit des Stützlagers weiter steigern.

Der Einsatz einer derartigen Stützrolle erfolgt insbesondere in der Transportindustrie oder der Schwerindustrie zum Bewegen schwerer Lasten, wobei große Radial- und Axialkräfte wirken. Insbesondere ist ein Einsatz der erfindungsgemäßen Stützrolle an Gabelstaplern, auf Schiffen, insbesondere auf Transport- und Arbeitsschiffen, oder in der Stahlindustrie bevorzugt. Auf einem Arbeitsschiff werden derartige Stützrollen beispielsweise eingesetzt, um Stahlträger zu verfahren oder um Türme drehbar zu lagern. In der Stahlindustrie kommen derartige Stützrollen in Richtmaschinen oder Kaltwalzwerken zum Einsatz.

Die Figuren 1 und 2 zeigen nicht erfindungsgemäße, die Figuren 3 bis 5 beispielhaft mögliche Ausführungsformen einer erfindungsgemäßen Stützrolle. So zeigt
- FIGUR 1: einen Längsschnitt durch eine nicht erfindungsgemäße erste Stützrolle;
- FIGUR 2: einen Ausschnitt aus Figur 1 im Bereich eines Deckels;
- FIGUR 3: einen Längsschnitt durch eine erfindungsgemäße zweite Stützrolle;
- FIGUR 4: den Bereich Z aus Figur 3 in vergrößerter Darstellung;
- FIGUR 5: eine dreidimensionale Ansicht einer Stützrolle.

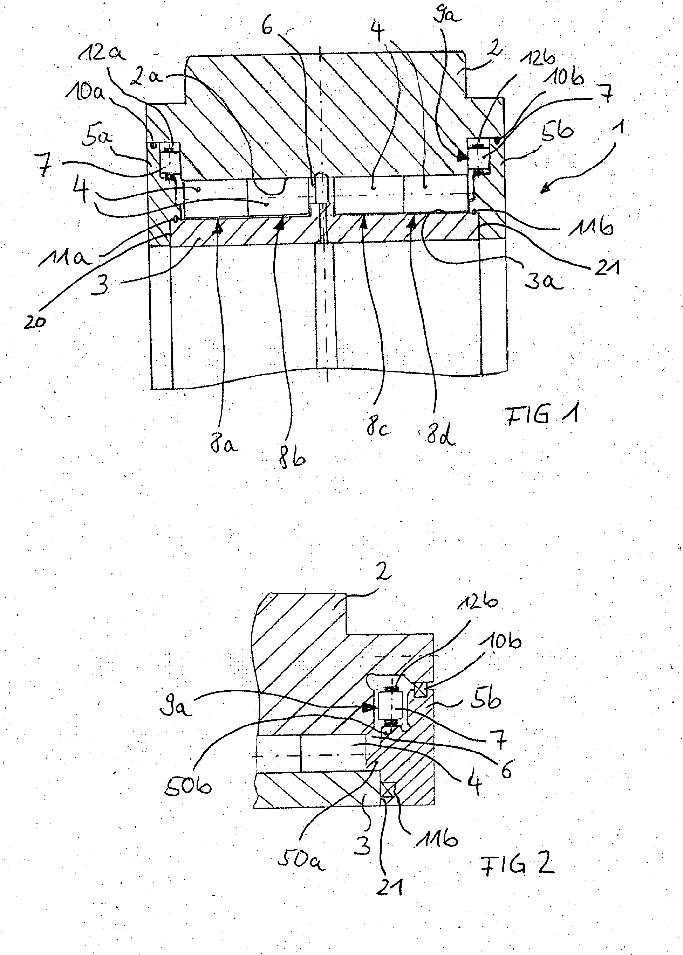

Figur 1 zeigt einen Längsschnitt durch eine nicht erfindungsgemäße erste Stützrolle 1, wobei nur die obere Hälfte des Stützrolle 1 dargestellt ist. Die Stützrolle 1 weist einen Außenring 2, einen Innenring 3 und zwischen dem Außenring 2 und dem Innenring 3 erste Wälzkörper 4 auf. Die ersten Wälzkörper 4 sind auf Laufbahnen 2a, 3a abrollbar, wobei die Laufbahn 2a am Außenring 2 und die Laufbahn 3a am Innenring 3 angeordnet ist. Dabei sind die ersten Wälzkörper 4 hier in vier Reihen 8a, 8b, 8c, 8d nebeneinander angeordnet. Weiterhin sind zwei Deckel 5a, 5b vorhanden, wobei der Deckel 5a an einer Stirnseite 20 des Innenrings 3 und der Deckel 5b an der Stirnseite 21 des Innenrings 3 klemmend angeordnet ist. Weiterhin sind zwischen dem Außenring 2 und jedem der Deckel 5a, 5b abrollbare zweite Wälzkörper 7 vorhanden, die in einer Reihe 9a angeordnet sind. Die zweiten Wälzkörper 7 sind durch einen Käfig 12a, 12b, der hier aus Messing gebildet ist, geführt. Die Deckel 5a, 5b erstrecken sich in einen Raum 6 zwischen dem Außenring 2 und dem Innenring 3 und bilden eine Seitenführung für die ersten Wälzkörper 4 aus. Der jeweilige Käfig 12a, 12b läuft gegen einen ersten Absatz 50 b (vergleiche Figur 2) an jedem Deckel 5a, 5b an. Die Deckel 5a, 5b sind den Raum 6 zwischen dem Außenring 2 und dem Innenring 3 begrenzend ausgebildet. An jedem der Deckel 5a, 5b ist radial eine erste Dichtungsanordnung 10a, 10b vorhanden, die zum Außenring 2 hin abdichtend ausgebildet ist. Weiterhin ist an jedem der Deckel 5a, 5b eine zweite Dichtungsanordnung 11a, 11b vorhanden, die zum Innenring 3 hin abdichtend ausgebildet ist. Dabei sind die Deckel 5a, 5b nicht mit dem Außenring 2 oder dem Innenring 3 verschraubt und auch nicht zwischen diesen verklemmt. Die Deckel 5a, 5b bilden dabei eine Zentrierung für den Innenring 3. Der Außenring 2, der Innenring 3 und die ersten Wälzkörper 4 bilden ein Radiallager. Der Außenring 2 bildet weiterhin zusammen mit den Deckeln 5a, 5b und den zweiten Wälzkörpern 7 zwei weitere Axiallager.

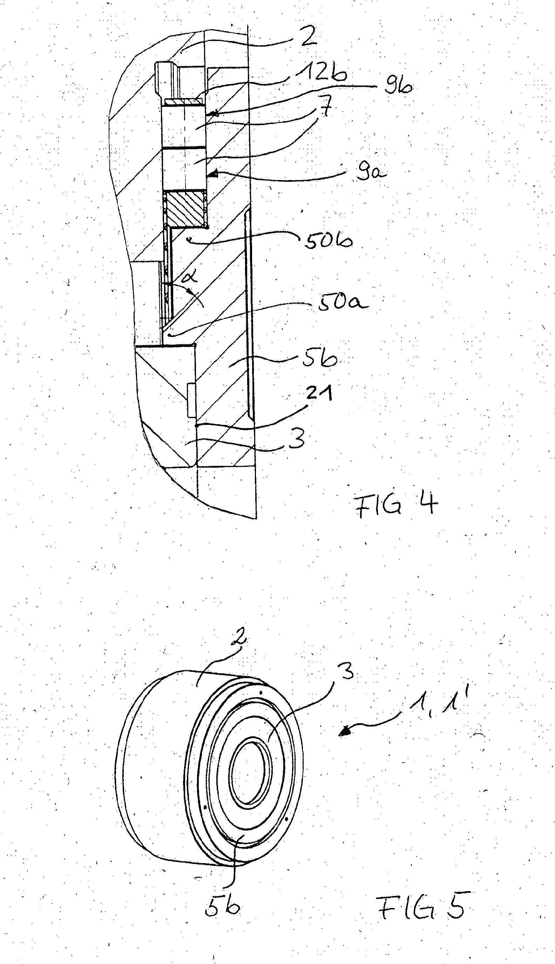

Figur 2 zeigt einen Ausschnitt aus Figur 1 im Bereich des Deckels 5b. Gleiche Bezugszeichen wie in Figur 1 kennzeichnen gleiche Elemente. Allerdings ist hier die zweite Dichtungsanordnung 11b im Unterschied zu Figur 1 an den Stirnseiten 20, 21 und damit seitlich am Innenring 3 anliegend ausgeführt. In dieser Darstellung ist ein erster Absatz 50b am Deckel 5b angeordnet, an welchem die zweiten Wälzkörper 7 beziehungsweise hier der die zweiten Wälzkörper 7 führende Käfig 12b, anlaufen. Weiterhin ist zu erkennen, dass die ersten Wälzkörper 4 seitlich von dem Deckel 5b mittels eines zweiten Absatzes 50a geführt sind, wobei der zweite Absatz 50a in Richtung des ersten Absatzes 50b angeschrägt ist (vergleiche Winkel a in Figur 4).

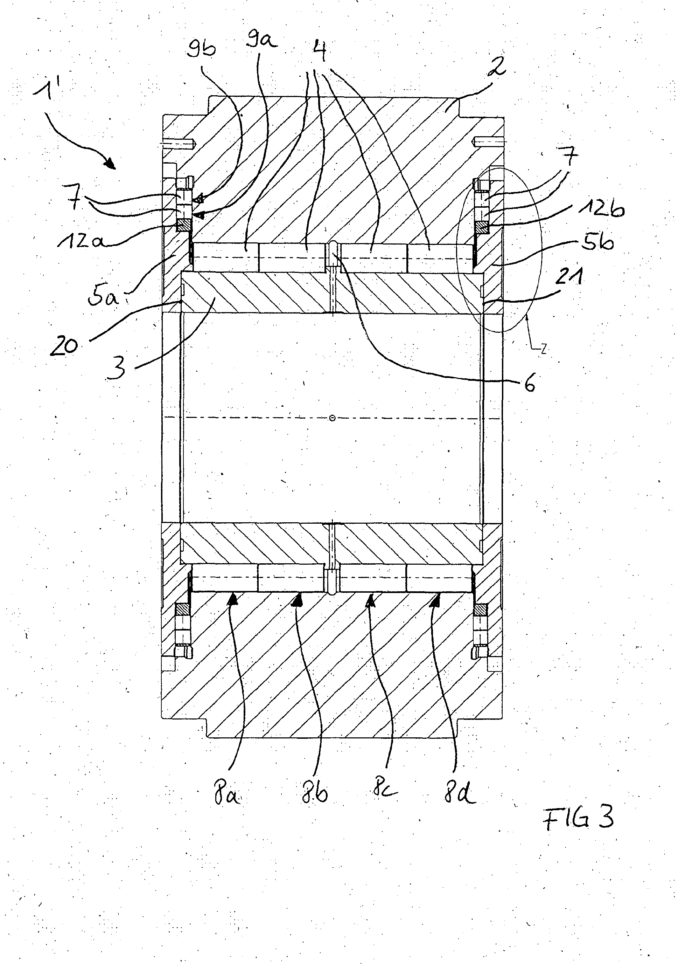

Figur 3 zeigt einen Längsschnitt durch eine erfindungsgemäße zweite Stützrolle 1'. Gleiche Bezugszeichen wie in Figur 1 oder 2 kennzeichnen gleiche Elemente. Im Unterschied zu Figur 1 und 2 sind hier zwei Reihen 9a, 9b von zweiten Wälzkörpern 7 vorhanden. Anstelle von einem Käfig 12a, 12b können hier auch jeweils zwei Käfige vorgesehen sein.

Figur 4 zeigt den Bereich Z aus Figur 3 in vergrößerter Darstellung. Gleiche Bezugszeichen wie in Figur 3 kennzeichnen gleiche Elemente. Der erste Absatz 50b am Deckel 5b ist erkennbar, an welchem die zweiten Wälzkörper 7 beziehungsweise hier der die zweiten Wälzkörper 7 führende Käfig 12b, anlaufen. Weiterhin ist zu erkennen, dass die ersten Wälzkörper 4 seitlich von dem Deckel 5b mittels des zweiten Absatzes 50a geführt sind, wobei der zweite Absatz 50a in Richtung des ersten Absatzes 50b angeschrägt ist. Der Winkel a liegt dabei insbesondere im Bereich von 45°.

Figur 5 zeigt eine dreidimensionale Ansicht einer Stützrolle 1, 1' mit dem Außenring 2, dem Innenring 3 und einem Deckel 5b.

### Bezugszeichenliste

- 1,1': Stützrolle
- 2: Außenring
- 2a: Laufbahn
- 3: Innenring
- 3a: Laufbahn
- 4: erste Wälzkörper
- 5a, 5b: Deckel
- 6: Raum
- 7: zweite Wälzkörper
- 8a, 8b, 8c, 8d: Reihe an ersten Wälzkörpern
- 9a, 9b: Reihe an zweiten Wälzkörpern
- 10a, 10b: erste Dichtungsanordnung
- 11a, 11b: zweite Dichtungsanordnung
- 12a, 12b: Käfig
- 20, 21: Stirnseite
- 50b: erster Absatz
- 50a: zweiter Absatz
- α: Winkel

## Patentansprüche

1. Stützrolle (1, 1) mit einem Außenring (2), einem Innenring (3) und zwischen dem Außenring (2) und dem Innenring (3) auf Laufbahnen (2a, 3a) abrollbaren ersten Wälzkörpern (4), die in mindestens zwei Reihen (8a, 8b, 8c, 8d) nebeneinander angeordnet sind, wobei weiterhin zwei Deckel (5a, 5b) vorhanden sind, wobei jeweils einer der Deckel (5a, 5b) an einer Stirnseite (20, 21) des Außenrings (2) angeordnet ist, wobei weiterhin zwischen dem Außenring (2) und jedem der Deckel (5a, 5b) abrollbare zweite Wälzkörper (7) vorhanden sind, wobei die Deckel (5a, 5b) lediglich klemmend am Außenring (2) oder am Innenring (3) befestigt sind, **dadurch gekennzeichnet, dass** die zweiten Wälzkörper (7) in zwei oder mehr Reihen (9a, 9b) angeordnet sind.

2. Stützrolle (1', 1) nach Anspruch 1, wobei die Deckel (5a, 5b) eine Seitenführung für die ersten Wälzkörper (4) ausbilden.

3. Stützrolle (1, 1') nach einem der Ansprüche 1 oder 2, wobei die Deckel (5a, 5b) einen Raum (6) zwischen dem Außenring (2) und dem Innenring (3) begrenzend ausgebildet sind.

4. Stützrolle (1, 1') nach einem der Ansprüche 1 bis 3, wobei an jedem der Deckel (5a, 5b) mindestens eine erste Dichtungsanordnung (10a, 10b) vorhanden ist, die zum Außenring (2) hin abdichtend ausgebildet ist.

5. Stützrolle (1, 1') nach Anspruch 4, wobei die mindestens eine erste Dichtungsanordnung (10a, 10b) radial an jedem der Deckel (5a, 5b) vorhanden ist.

6. Stützrolle (1, 1') nach einem der Ansprüche 1 bis 5, wobei die Reihen (9a, 9b) an zweiten Wälzkörpern (7) durch mindestens einen Käfig (12a, 12b) geführt angeordnet sind.

7. Stützrolle (1, 1') nach Anspruch 6, wobei der mindestens eine Käfig (12a, 12b) aus Messing ausgebildet ist.

8. Stützrolle (1, 1') nach einem der Ansprüche 1 bis 7, wobei die zweiten Wälzkörper (7) über einen ersten Absatz (50b) an jedem Deckel (5a, 5b) radial geführt sind.

9. Stützrolle (1, 1') nach einem der Ansprüche 1 bis 8, wobei die ersten Wälzkörper (4) in vier Reihen (8a, 8b, 8c, 8d) nebeneinander angeordnet sind.

## Claims

1. A support roller (1, 1) having an outer ring (2), an inner ring (3) and first rolling bodies (4) rollable on raceways (2a, 3a) between the outer ring (2) and the inner ring (3), which rolling bodies are arranged in at least two rows (8a, 8b, 8c, 8d) adjacent to one another, wherein two covers (5a, 5b) are also provided, wherein one of the covers (5a, 5b) is arranged in each case on an end face (20, 21) of the outer ring (2), wherein furthermore second rolling bodies (7) rollable between the outer ring (2) and each of the covers (5a, 5b) are provided, wherein the covers (5a, 5b) are attached only in a clamping manner to the outer ring (2) or to the inner ring (3), **characterized in that** the second rolling bodies (7) are arranged in two or more rows (9a, 9b).

2. The support roller (1', 1) according to claim 1, wherein the covers (5a, 5b) form a lateral guide for the first rolling bodies (4).

3. The support roller (1, 1') according to one of claims 1 or 2, wherein the covers (5a, 5b) are designed to delimit a space (6) between the outer ring (2) and the inner ring (3).

4. The support roller (1, 1') according to any one of claims 1 to 3, wherein at least one first sealing arrangement (10a, 10b) is provided on each of the covers (5a, 5b), which sealing arrangement is designed to seal against the outer ring (2).

5. The support roller (1, 1') according to claim 4, wherein the at least one first sealing arrangement (10a, 10b) is provided radially on each of the covers (5a, 5b).

6. The support roller (1, 1') according to one of claims 1 to 5, wherein the rows (9a, 9b) are arranged on second rolling bodies (7) so as to be guided by at least one cage (12a, 12b).

7. The support roller (1, 1') according to claim 6, wherein the at least one cage (12a, 12b) is made of brass.

8. The support roller (1, 1') according to one of claims 1 to 7, wherein the second rolling bodies (7) are guided radially on each cover (5a, 5b) via a first shoulder (50b).

9. The support roller (1, 1') according to one of claims 1 to 8, wherein the first rolling bodies (4) are arranged in four rows (8a, 8b, 8c, 8d) adjacent to one another.

## Revendications

1. Palier d'appui (1, 1) comprenant une bague extérieure (2), une bague intérieure (3) et, entre la bague extérieure (2) et la bague intérieure (3), des premiers corps de roulement (4) pouvant rouler, sur des chemins de roulement (2a, 3a), lesquels sont disposés les uns à côté des autres sur au moins deux rangées (8a, 8b, 8c, 8d), dans lequel en outre deux couvercles (5a, 5b) sont présents, dans lequel respectivement l'un des couvercles (5a, 5b) est disposé sur une face frontale (20, 21) de la bague extérieure (2), dans lequel en outre, entre la bague extérieure (2) et chacun des couvercles (5a, 5b), des seconds corps de roulement (7) pouvant rouler sont présents, dans lequel les couvercles (5a, 5b) sont fixés uniquement par serrage sur la bague extérieure (2) ou sur la bague intérieure (3), **caractérisé en ce que** les seconds corps de roulement (7) sont disposés sur deux ou plusieurs rangées (9a, 9b).

2. Palier d'appui (1', 1) selon la revendication 1, dans lequel les couvercles (5a, 5b) forment un guidage latéral pour les premiers corps de roulement (4).

3. Palier d'appui (1, 1') selon l'une quelconque des revendications 1 ou 2, dans lequel les couvercles (5a, 5b) sont formés de manière à délimiter un espace (6) entre la bague extérieure (2) et la bague intérieure (3).

4. Palier d'appui (1, 1') selon l'une quelconque des revendications 1 à 3, dans lequel, sur chacun des couvercles (5a, 5b), au moins un premier dispositif d'étanchéité (10a, 10b) est présent, lequel est formé de manière à étanchéifier la bague extérieure (2).

5. Palier d'appui (1, 1') selon la revendication 4, dans lequel l'au moins un premier dispositif d'étanchéité (10a, 10b) est présent radialement sur chacun des couvercles (5a, 5b).

6. Palier d'appui (1, 1') selon l'une quelconque des revendications 1 à 5, dans lequel les rangées (9a, 9b) sont disposées sur des seconds corps de roulement (7), guidés par au moins une cage (12a, 12b).

7. Palier d'appui (1, 1') selon la revendication 6, dans lequel l'au moins une cage (12a, 12b) est en laiton.

8. Palier d'appui (1, 1') selon l'une quelconque des revendications 1 à 7, dans lequel les seconds corps de roulement (7) sont guidés radialement au moyen d'un premier épaulement (50b) sur chaque couvercle (5a, 5b).

9. Palier d'appui (1, 1') selon l'une quelconque des revendications 1 à 8, dans lequel les premiers corps de roulement (4) sont disposés sur quatre rangées (8a, 8b, 8c, 8d) les uns à côté des autres.
